# EUROPEAN PATENT APPLICATION

(11) **EP 1 541 716 A1**
(43) Date of publication of application: **15.06.2005**
(21) Application number: 03795222.3
(22) Date of filing: 13.08.2003
(51) Int. Cl.: C25C 3/28, C04B 35/46

(54) **POROUS SINTERED COMPACT OF TITANIUM OXIDE FOR PRODUCTION OF METALLIC TITANIUM THROUGH DIRECT ELECTROLYTIC PROCESS AND PROCESS FOR PRODUCING THE SAME**

(30) Priority: 11.09.2002 JP 2002265537; 28.01.2003 JP 2003018302
(71) Applicant: Sumitomo Titanium Corporation, Amagasaki-shi, Hyogo 660-8533 (JP)
(72) Inventor: HORI, Masahiko, c/o Sumitomo Titanium Corporation, Amagasaki-shi, Hyogo 660-8533 (JP)
(74) Representative: Uchida, Kenji
(86) International application number: PCT/JP2003/010325
(87) International publication number: WO 2004/024995

(57) **Abstract**

A porous sintered compact of titanium oxide of the present invention is **characterized in that** it has a porosity of 20 to 65% and a hardness of 60 (HV) or higher, or **characterized in that** it has a porosity of 20 to 65%, a specific surface area of 0.1 to 5.0 m²/cm³, a volume ratio of pores with 0.3 to 100µm diameter to be 10% or higher to the total pore volume and a hardness of 60 (HV) or higher. Using this porous sintered compact as an electrolytic raw material in the method in which titanium oxide is reduced by electrolysis with an electrolyte composed of a molten salt enables efficiently obtaining metallic titanium. The electrolytic process using a molten salt is attracting attention as a process capable of directly obtaining metallic titanium from titanium oxide with lower cost than in conventional processes, and the employment of the above porous sintered compact would promote its realization remarkably.

## Description

### TECHNICAL FIELD

The present invention relates to a process for producing metallic titanium in which a titanium raw material of oxide form is reduced to metallic titanium in a molten salt by electrolysis, a sintered compact for raw material electrode capable of efficiently obtaining metallic titanium, and a process for producing the same.

### BACKGROUND ART

Metallic titanium is excellent in corrosion resistance and design property with proper elasticity, and extensively applied to aviation materials, roof materials, golf heads, materials for heat exchanger, chemical plants and the like as a material with a high strength obtained in the same mass, so called high specific strength. In recent years, its application is increasingly extended to medical equipment and the like as a metal nontoxic to human body. However, since metallic titanium is expensive as metal because many processes are required for smelting in its production, a further inexpensive industrial production method with high productivity is desired.

Metallic titanium is generally produced by chlorinating a titanium oxide (mainly TiO₂) of raw material to titanium tetrachloride followed by refining by distillation, and reductively reacting it with Mg to form spongy metallic Ti. In another process, Na can be used also for the reduction step. The process using Mg is called the Kroll process, and the process using Na the Hunter process.

Since it is dangerous to rapidly conduct this reductive reaction of titanium tetrachloride that is an exothermic reaction, a long time is required for its sufficiently controlled reaction, and the productivity is significantly limited because of the batch system. Further, although MgCl₂ generated by the reduction is separated into Mg and Cl₂ through molten salt electrolytic process for re-using, about 2/3 of the power used for the smelting of metallic titanium is consumed in this molten salt electrolysis. Accordingly, a process capable of reducing the production cost by shortening the reaction time and effectively using the power is demanded.

Recently, a direct electrolytic process for electrically reducing a metallic oxide in a chloride molten salt is proposed. This process is attracting attention as a process capable of significantly rationalizing the production process, since titanium can be directly electrolyzed once it can be applied to titanium.

This direct electrolytic process, which is disclosed in Published Japanese Translation of PCT International Publication No. 2002-517613, utilizes the phenomenon that, for example, when electric current is conducted into a molten salt with a cathode composed of metallic titanium containing oxygen, a migration reaction of the oxygen in the titanium to the electrolyte proceeds more preferentially than precipitation of the metal ion in the molten salt, that is the electrolyte, onto the surface of the titanium of the cathode.

It is described that, in addition to the oxygen contained in a conductor such as metallic titanium, oxygen in a titanium oxide can be similarly removed, if it is in contact with the cathode, to form metallic titanium. In the production of metallic titanium, TiO₂ is used in the form of a 40-50% porous body as the electrolytic raw material by making its powder to slurry and molding it into various shapes by slip casting followed by sintering.

The molten salt electrolytic process is presumed to be capable of effectively removing the oxygen present in titanium that is a conductor. However, the reduction of oxide titanium to metallic titanium is no easy task, and there is a need for solving various problems.

### DISCLOSURE OF THE INVENTION

The present invention has an object to provide a raw material sintered compact capable of enhancing the generation efficiency of titanium in a process wherein titanium oxide is reduced to metallic titanium by the electrolysis with an electrolyte composed of a molten salt, a process for producing the sintered compact, and a process for efficiently producing metallic titanium by use of the sintered compact.

The present inventors made various examinations for the process for directly obtaining metallic titanium by electrolyzing titanium oxide (TiO₂) of raw material in a molten salt such as CaCl₂, MgCl₂ or the like. The sintered compact of titanium oxide as the raw material was produced by a general sintering method using the powder thereof. Particularly, as a result of reduction of the titanium oxide as a cathode conductor or in contact with a cathode, metallic titanium could be obtained, but the generation efficiency of Ti was extremely poor, and this process was found not to be applicable to industrial production as it is.

When a compound or the like is reduced to metal through an electrolytic process, the generated quantity of the metal is proportional to the provided quantity of electricity according to the Faraday's law. In the present specification, the ratio of the actual quantity of metallic titanium obtained by electrolysis to an ideal generation quantity of metallic titanium according to the Faraday's law, which corresponds to the provided quantity of electricity, is referred to as the generation efficiency of titanium.

Oxide titanium has fairly good electric conductivity at a high temperature where the molten salt is used as the electrolyte. Therefore, the present inventors assumed at first that the reduction would be performed according to the mechanism that, by carrying electric current to the titanium oxide as a cathode or the titanium oxide in contact with a conductor cathode, the oxygen contained therein is ionized and desorbed on the cathode surface to thereby form metallic titanium.

However, an attempt to explain the reductive reaction phenomenon caused on the basis of such a mechanism did not necessarily and sufficiently illustrate the phenomenon. Further, improvements in the process or condition based on the mechanism to improve the generation efficiency hardly exhibited the effect.

For example, if the reductive reaction proceeds by the ionization of oxygen as described above, the generation quantity of metallic titanium should be increased as the electric current is increased. However, even if the current is increased, the generation quantity of titanium is not proportionally increased. Further, the titanium oxide has the property of increasing electric conductivity at high temperature, but does not pass the current so much as metal, and there is a limitation in sufficiently increasing the current. Further, the generation quantity of titanium to the same current value is satisfactory just after starting the electrolysis, but largely deteriorated with the lapse of time.

In the course of such an examination, it was found that there is the phenomenon that the generation efficiency of titanium is greatly improved when titanium oxide laid in a porous state due to imperfect sintering is used as the raw material or as an electrode as for the raw material. Further, it was also found that the electric energization of the porous body is not always required, and metallic titanium is generated once the porous body is in a position as close as possible to a conductor used as the cathode, even if not surely in contact therewith.

It was assumed from this that the reductive reaction of titanium oxide might include, in addition to electric ionization of oxygen, generation of metallic titanium resulted from that Ca generated by electrolysis of CaCl₂ or the like used as the electrolyte owing to the electric energization reduces the titanium oxide. Ca is an extremely active metal, which reacts, even if generated by electric energizing, with oxygen or dissociated chlorine in the electrolyte, or oxygen or nitrogen in the atmosphere to form another compound, and extinguishes. However, when the titanium oxide is the cathode itself, or present just close to the cathode, Ca would reduce it prior to extinguishing, and generate metallic titanium.

When the experimental result of the metallic titanium generation thus examined is considered from the standpoint that this reductive reaction caused by the Ca generated by this electrolysis is also included, many aspects can be rationally explained. The significant improvement in generation efficiency of titanium by using a porous sintered compact as the raw material is also considered to be attributable to that the surface area to the same mass or the specific surface area is increased due to adaptation of the porous sintered compact, thus increasing the area to make contact with the Ca which is generated by electrolysis and dispersed to the molten salt.

When metallic titanium is produced by electrolysis, the generation efficiency that how much the generation quantity can get close to the quantity estimated from the Faraday's law, and the generation rate, depending on the provided quantity of electricity, are important.

There is an occasion that, even if the generation rate is high with a large electric current to the same potential in the initial stage of electrolysis, the current may become difficult to pass in accordance with the continuation of electrolysis, thus blocking the electrolysis. In spite of a high generation rate in the initial stage of electrolysis, the sintered electrode may occasionally be collapsed, disenabling the electrolysis.

As a result of examinations for raising the porosity to increase the specific surface area while variously changing the processes for producing the porous sintered compact, two serious problems became clear. One problem is that the generation efficiency or generation rate cannot be greatly increased only by raising the porosity, and the other is that continuation of electrolysis for obtaining metallic titanium with a sufficiently low oxygen content may cause collapse of the porous sintered compact, disenabling further reduction.

The porosity is calculated as a shortage of the apparent density determined from measurement of the weight and volume of the sintered compact to the theoretic density (4.2 g/cm³) of compact TiO₂ solid. However, since it could not be determined whether or not the porous sintered compact is suitable for molten salt electrolysis only by the magnitude of porosity, the total surface area per apparent unit volume or specific surface area by gas adsorption process (BET process) and the pore distribution by mercury porosimetry were further measured in combination as the evaluation of the surface to make contact with the molten salt.

It is assumed that the surface area contactable with the molten salt of the porous sintered compact can be measured by the BET process, and the distribution of pore diameters which the molten salt can be crawled in can be known by the mercury porosimetry.

The specific surface area and pore distribution were measured for some porous sintered compacts, and these values were collated with the generation efficiency and generation rate of metallic Ti in molten salt electrolysis. As a result, it was found that excellent efficiency and rate can be obtained when these measurement values are within specified ranges. The specific surface area and pore distribution do not necessarily correspond with the magnitude of porosity.

The larger the specific surface area is, the more the area to make contact with the molten salt or Ca in the molten salt increases. However, the presence of the upper limit is attributable to that, when the area becomes excessively large, the pore diameter becomes too small to discharge the resultant CaO.

It was also found from the measurement of pore distribution that, if the number of pores of diameters within a specified range is not less than a certain value, the drop of the generation efficiency during the progress of electrolysis can be mitigated and maintenance of the generation rate can be secured.

The reason for causing such a phenomenon was not necessarily clarified. However, if the Ca generated by electrolysis significantly affects the reduction of titanium oxide, an extremely small pore diameter disturbs the reaction since a reduction product cannot be easily removed from the reactive surface, resulting in the deterioration of generation efficiency due to the suspension of the reaction, and an excessively large pore diameter also arrests the progress of the reaction since the generated Ca cannot stay around. Accordingly, the presence of further more pores of proper sizes may be important for preventing the deterioration of generation efficiency.

Based on such a result, production conditions for obtaining a porous sintered compact, the specific surface area and pore distribution to be within optimum ranges were examined. In the method of making the powder to slurry by addition of water and molding by slip casting followed by sintering, it is easy to enhance the porosity, but it is difficult to control the specific surface area or pore distribution. Further, this method is not preferable since the sintered compact may occasionally collapse with the progress of electrolysis.

In contrast to this, it was confirmed that a porous sintered compact having a necessary specific surface area or pore distribution can be obtained by controlling the grain size of powder, performing press-molding by use of dies with controlled pressurizing force, and controlling the temperature and time of sintering.

As described above, it was found that the generation efficiency and generation rate of metallic titanium can be improved by limiting, in the porous sintered compact used as the electrolytic raw material, not only the porosity but also the specific surface area as well as the pore distribution. However, when the electrolysis is continued to obtain metallic titanium with a sufficiently low oxygen content, the porous sintered compact is frequently collapsed, thus disabling the further reduction.

The reason for this is assumed that the porous sintered compact having an intended specific surface area or pore distribution is frequently laid in an imperfectly sintered state because it can be more easily obtained at a lower sintering temperature, and this causes the collapse.

As a result of examinations for a compact easy to collapse and a compact causing no collapse, it was confirmed that no collapse is caused with a hardness of 60 HV or higher after sintering even if the electrolysis is continued until oxygen is sufficiently reduced. When the porous sintered compact has an intended porosity with a hardness of said value or higher after sintering, its collapse can be inhibited during electrolytic reduction regardless of the specific surface area or pore distribution.

It was assumed that the sintering is required to progress at a further low temperature in order to ensure a high hardness after sintering with the intended specific surface area and pore distribution of porous state. As a result of further examinations for the production condition of such a sintered compact, it was found that addition of a small amount of titanium suboxide such as TiO, Ti₂O₃, Ti₃O₅ or the like is sufficient.

This is considered to be attributable to that by adding the titanium suboxide to the raw material of titanium oxide powder, the sintering in contacts between grains is promoted, even if the density of the compact before heating is not high, to cause the compact in a sufficiently sintered state as it is porous.

When the porous sintered compact thus-obtained is electrolyzed in a state of being disposed as close as possible to an electric conductor that is a cathode, the reductive reaction proceeds even if it is not necessarily in contact with the cathode conductor to pass the current. However, when the electrolysis is executed by use of a cathode composed of an integrated electrode in which the porous sintered compact is closely packed around a core of a good-electric-conductor, the generation efficiency of titanium can be further greatly improved.

The respective marginal conditions were confirmed based on the above-mentioned knowledge to complete the present invention. The gist of the prevent invention is as follows.
(1) A porous sintered compact of titanium oxide for production of metallic titanium through direct electrolytic process, characterized in that it has a porosity of 20 to 65% and a hardness of 60 (HV) or higher.
(2) A porous sintered compact of titanium oxide for production of metallic titanium through direct electrolytic process, characterized in that it has a porosity of 20 to 65%, a specific surface area of 0.1 to 5.0 m²/cm³, and a volume ratio of pores with 0.3 to 100µm diameter to be 10% or higher to the total pore volume.
(3) A porous sintered compact of titanium oxide for production of metallic titanium through direct electrolytic process, characterized in that it has a porosity of 20 to 65%, a hardness of 60 (HV) or higher, a specific surface area of 0.1 to 5.0 m²/cm³, and a volume ratio of pores with 0.3 to 100µm diameter to be 10% or higher to the total pore volume.
(4) A process for producing a porous sintered compact of titanium oxide according to any one of (1) to (3), characterized by using a titanium oxide powder having a grain size of 0.2 to 2000µm, molding it into a required shape with pressurization in a range of 9.8 to 78.5 MPa, and sintering at 1100 to 1500°C for 0.5 to 10 hours.
(5) A process for producing a porous sintered compact of titanium oxide according to any one of (1) to (3), characterized by adding and mixing 0.1 to 40%, based on mass, of a titanium suboxide to a titanium oxide powder followed by molding into a required shape, and sintering at 900 to 1400°C for 0.5 to 10 hours.
(6) A process for producing a porous sintered compact of titanium oxide according to any one of (1) to (3), characterized by using a titanium oxide powder having a grain size of 0.2 to 2000µm, adding and mixing 0.1 to 40%, based on mass, of a titanium suboxide powder thereto followed by molding into a required shape with pressurization in a range of 9.8 to 78.5 MPa, and sintering at 900 to 1400°C for 0.5 to 10 hours.
(7) A process for producing metallic titanium, characterized by using a porous sintered compact of titanium oxide according to any one of (1) to (3), arranging it adjacently to a conductor or closely adhered around the conductor to constitute a cathode, dipping it in a molten salt electrolyte of 800 to 1050°C containing 40 mass% or more of calcium chloride, and reducing it by electric energization.

### BRIEF DESCRIPTION OF THE DRAWINGS

Fig. 1 is a view schematically showing an apparatus for producing metallic titanium through molten salt electrolytic process; and
Figs. 2 are illustrative views of a structure of a cathode constituted by a workpiece material, wherein (A) shows an electrode in which small masses of a porous sintered compact of titanium oxide are arranged adjacently to the circumference of a metallic conductor, and (B) shows an electrode in which the workpiece material of the porous sintered compact of titanium oxide is closely adhered around the metallic conductor as being a core.

### BEST MODE FOR CARRYING OUT THE INVENTION

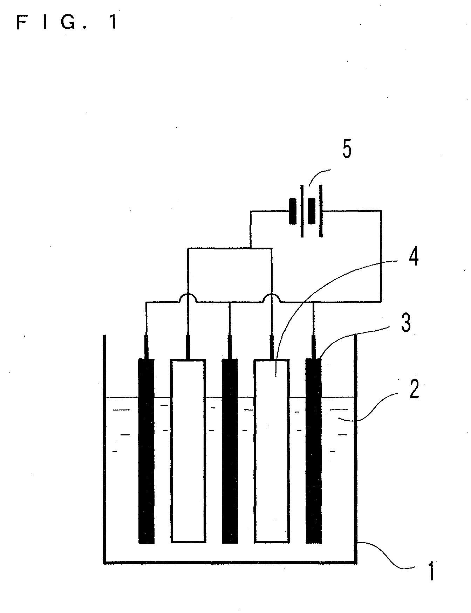

A porous sintered compact of titanium oxide according to the present invention is, as an example, placed in the vicinity of a cathode or as an integrated electrode in an electrolytic cell containing an electrolyte composed of a molten salt, as schematically shown in Fig. 1, and reduced to metallic titanium. In Fig. 1, an anode 3 and a cathode 4 are dipped in a molten salt cell 2 retained in a container 1 which can be heated and corrosion-resistant to molten salts, and direct current is supplied from a power supply 5 to perform electrolysis.

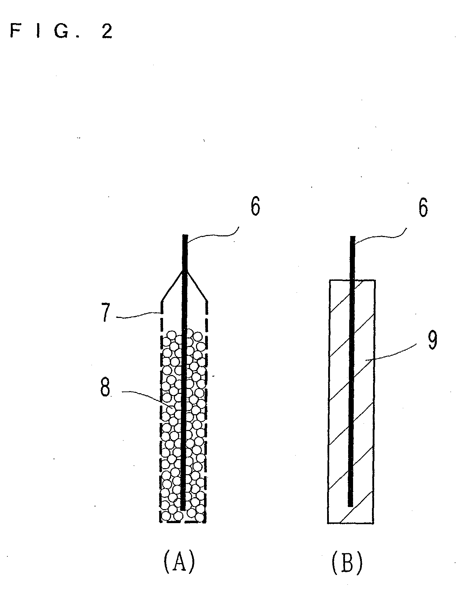

In this case, the cathode may be constituted, for example, into (A) an electrode in which a wire basket 7 allowing the circulation of a liquefied molten salt is placed around a metallic conductor 6, and small masses of a porous sintered compact of titanium oxide 8 are placed adjacently to the conductor 6 in the wire basket 7, as schematically shown in Fig. 2, or (B) an electrode in which the raw material of the porous sintered compact of titanium oxide is adhered closely around the metallic conductor 6 as being a core. These electrodes may have any shape such as bar-like, sheet-like or other shape.

The porous sintered compact of titanium oxide which is reduced to metallic titanium can be a porous body having a porosity of 20 to 65% and a hardness of 60 HV or higher.

The reason for setting the porosity to 20% or higher is that a porosity below 20% causes a significant deterioration of generation efficiency of Ti. This is attributable to that pores spatially isolated and blocked to the outside are increased, resulting in a relative decrease in the contact area with the molten electrolyte. On the other hand, with a porosity exceeding 65%, not only the shape of the raw material starts collapsing in the middle of the reduction step, disabling a sufficient reduction step, but also the recovery of metallic titanium becomes difficult.

To increase the porosity, an addition of a large quantity of a binder or the like is required at the time of producing a sintering material by pressing. However, since such a binder or the like must be eliminated by heating at the time of sintering, which deteriorates the productivity, the porosity is desirably set to 20% or higher and lower than 40%.

The reason for setting the hardness of the porous sintered compact to 60 HV or higher is that the shape of the raw material may be collapsed during electrolytic reduction due to insufficient sintering when the hardness is below 60HV. In case of a porous body having an intended porosity, the upper limit of hardness is not particularly specified.

The porous sintered compact of titanium oxide as an electrolytic raw material which is reduced to metallic titanium can have a porosity of 20 to 65%, a specific surface area of 0.1 to 5.0 m²/cm³, and a volume ratio of pores with 0.3 to 100µm diameter to be 10% or higher to the total pore volume.

The reason for setting the porosity to 20 to 65% is the same as described above. Similarly, to obtain an increased porosity, an addition of a large quantity of a binder or the like is required at the time of producing a sintering material by pressing. Since the elimination of such a binder or the like by heating must be performed at the time of sintering, which leads to deterioration of productivity, the porosity is desirably set to 20% or higher and lower than 40%.

The reason for setting the specific surface area to 0.1 to 5.0 m²/cm³ is that the specific surface area either smaller than 0.1 m²/cm³ or larger than 5.0 m²/cm³ causes a deterioration of generation efficiency with a decreased generation rate. The specific surface area is measured according to a method called the BET process for determining from the monomolecular layer adsorption based on BET adsorption isothermal process of inert gas such as argon, nitrogen or the like.

The reason for setting such an optimum range for the specific surface area is that the area smaller than 0.1 m²/cm³ inhibits the reductive reaction because the area to make contact with the molten salt is too small, and with the area larger than 5.0 m²/cm³ resulting in smaller pore diameter deteriorates the circulation of the molten salt to disturb the rapid elimination of the reaction product, which may also consequently inhibit the reductive reaction.

The pore distribution is determined by mercury porosimetry. In the mercury porosimetry, the diameter of pores and the volume of the pores having the diameter thereof can be measured, and the total pore volume can be determined from the integration of pore distribution curves. The volume ratio of pores having diameters ranging from 0.3 to 100µm is set to 10% or higher to the total pore volume.

The reason is that the volume ratio of pores having diameters smaller than 0.3µm or larger than 100µm hardly affects the generation efficiency, but a volume ratio below 10%, for pores having diameters ranging from 0.3 to 100µm, results in a remarkable decrease in the generation efficiency. To keep the generation efficiency, at least 10% or more of the volume ratio is required for the pores ranging from 0.3 to 100µm. The higher the volume ratio is, the more the generation efficiency is improved. Therefore, the volume ratio is desirably closer to 100%.

Further, the porous sintered compact of titanium oxide of the electrolytic raw material which is reduced to metallic titanium desirably has a hardness of 60 or higher by Vickers hardness (HV), in addition to a porosity of 20 to 65%, a specific surface area of 0.1 to 5.0 m²/cm³, and a volume ratio of pores with 0.3 to 100µm diameter to be 10% or higher to the total pore volume.

The reason is that a hardness lower than 60HV may result in the shape collapse of the workpiece material during electrolytic reduction because of the insufficient sintering as described above. Although the porous sintered compact of titanium oxide for electrolytic reduction is likely to be insufficiently sintered in order to obtain a high porosity of 20 to 65%, the shape collapse during electrolysis is hardly caused if it is sintered so as to ensure a hardness of 60HV or higher. In this case, the upper limit of hardness is not particularly imposed when the porosity is within the above range.

The inhibition of the shape collapse by setting the hardness to 60HV or higher is effective regardless of the specific surface area or the pore distribution. Accordingly, when the hardness is set to 60 HV or higher in a porous sintered compact of oxide titanium having a porosity of 20 to 65%, a specific surface area of 0.1 to 5.0 m²/cm³, and a volume ratio of pores with 0.3 to 100µm diameter to be 10% or higher to the total pore volume, the shape collapse during electrolysis can be inhibited, and an extremely excellent raw material for electrolytic reduction can be obtained.

As the raw material of the porous sintered compact, oxide titanium powders such as rutile, anatase and the like are used. Impurities included in the raw material are frequently taken into metallic titanium as they are, although some of them are eliminated during electrolytic reduction. Accordingly, a material with impurities as less as possible is preferably used.

The average grain size of the raw material powder is set to the range from 0.2 to 2000µm. This is because if a large amount of grains smaller or larger than this range is included, it may be difficult to maintain the molded shape at the time of pressure-molding the mixed powder. This is also because the collapse is likely to occur during electrolysis because of an insufficient strength of the sintered compact after sintering, or an intended porosity may not be obtained.

A binder or the like can be added and kneaded to the powder of the raw material, particularly, when a higher porosity is required, or it is difficult to maintain the shape after pressure molding, but it may not be added. The raw material is molded into a desired shape by use of dies with pressurization in the range of 9.8 to 78.5 MPa. A pressurizing force lower than 9.8 MPa might make it difficult to maintain the shape after taken out from the dies, and pressurization higher than 78.5 MPa might make it impossible to obtain a specific surface area or pore diameter distribution within an intended range after sintering.

The shape of the porous sintered compact is not particularly limited. For example, in case of the electrode in which the small massive porous sintered compact 8 is retained by use of the basket 7 as shown in Fig. 2(A), excessively small masses, which may be fallen through the meshes of the basket, are difficult to handle, and excessively large masses need a long time for reduction step, resulting in the deterioration of the generation rate. Accordingly, the compact is preferably made to masses with a maximum diameter of about 2 to 30 mm. The small masses may have any shape such as spherical, columnar, cuboid, or other shape without having any particular limitation.

In the production of the small massive porous sintered compact, although the compact before sintering may have the above massive shape, the compact can be sintered as a larger sheet-like, bar-like, cylindrical or cuboid, or the like, and then pulverized to small masses of the above size.

In case of the electrode in which the material is closely adhered around a metallic conductor as being a core, as shown in Fig. 2 (B), the metallic conductor and the electrode can have any shape such as bar, plate or other shape without having any particular limitation. However, the distance from the conductor to the surface of the porous material which directly makes contact with the molten salt electrolyte is desirably set to 30 mm or less. The reason is that a distance exceeding 30 mm makes it difficult to increase the current density, despite good electric conductivity.

When the electrode of such an integrated structure is used, the electrode is constituted by molding the raw material powder kneaded body as the workpiece material into an electrode shape with the metallic conductor followed by integration by virtue of simultaneous sintering, or mechanically closely adhering the metallic conductor to the porous sintered compact. As the metal of the conductor to be the core, stainless steel or iron may be used, but metallic titanium is preferably used from the point of inclusion of impurities.

Although the electrode which is the electrolytic workpiece material may have either structure of Fig. 2(A) or (B), the integrated type (B) using the conductor as the core is desirable in the practical production from the point of satisfactory workability of the electrode such as handling in electrolysis, high generation efficiency, and the like.

The raw material powder is pressure-molded, sufficiently dried if necessary, and sintered at 1100 to 1500°C for 0.5 to 10 hours. When the temperature is lower than 1100°C, or the sintering time is less than 0.5 hour, the porous sintered compact cannot have a sufficient hardness because of insufficient sintering.

A sintering temperature exceeding 1500°C or a heating time exceeding 10 hours may result in a porosity of smaller than 20%, a specific surface area below 0.1 m²/cm³, a volume rate of pores of 0.3 to 100µm diameter to be below 10% to the total pore volume.

In the process for producing the porous sintered compact, when the raw material powder is pressure-molded after adding and mixing 0.1 to 40%, based on mass, of a titanium suboxide powder such as TiO, Ti₂O₃, Ti₃O₅ or the like, and then sintered, sintering sufficiently proceeds even in a sintering temperature range as low as 900 to 1400°C, and a hardness after sintering of 60 HV or higher can be ensured. The titanium suboxide is a titanium oxide deficient in oxygen to titanium oxide TiO₂, which may have any composition, and can be added alone or in mixture.

When 0.1 to 40% of the powder of the titanium suboxide with an average grain size of 0.2 to 2000µm is added and mixed thereto, similarly to the powder of the titanium oxide, and then molded into a desired shape with pressurization in the range of 9.8 to 78.5 MPa as described above, a porous sintered compact of titanium oxide having a porosity of 20 to 65%, a specific surface area of 0.1 to 5.0 m²/cm³, and a volume ratio of pores with 0.3 to 100µm diameter to be 10% or higher to the total pore volume, and a hardness of 60 HV or higher can be easily obtained by sintering at 900 to 1400°C for 0.5 to 10 hours.

The thus-produced porous sintered compact of titanium oxide is filled, in case of small masses, in the basket 7 surrounding the conductor 6, as shown in Fig. 2(A), to form the electrode. The conductor 6 may be a good electric conductor such as titanium, stainless steel, iron or the like, and the basket 7 may be formed of stainless steel or ceramics excellent in corrosion resistance since conductivity is not particularly required.

Since the reductive reaction is more difficult to occur as the distance between the porous sintered compact and the electric conductor is larger, an inner surface of the basket 7 is desirably set within 50 mm from the surface of the conductor 6. In case of the porous sintered compact of the electrode shape as shown in Fig. 2(B), in which the porous sintered compact is integrally molded around the conductor as being a core, it can be applied to the electrolysis as it is.

When an electrolytic cell of the structure shown in Fig. 1 is used, the process for producing metallic titanium through electrolytic reduction by use of the cathode composed of the porous sintered compact of titanium oxide as above is as follows.

In order to facilitate the promotion of the electrolytic reduction process, any molten salt which satisfies the following conditions can be used as the electrolyte 2 without particularly limiting other conditions.
(A) The salt or an oxide of its metal ion, even if adhered or penetrated into the porous sintered compact after the end of reduction, can be easily washed away with water or a weak acid.
(B) The metal generated by electrolysis of the electrolyte itself can reduce the titanium oxide.
(C) The salt can be laid in a molten state at a temperature of not less than the melting point of the metal generated in B and not greater than the melting point of Ti.

As molten salts satisfying these conditions, CaCl₂ may be used alone, otherwise MgCl₂, BaCl₂, NaCl, CaF, MgF or the like may be added to CaCl₂, which is a main component, i.e. makes up 40 mass% or more, for the purpose of decreasing the melting point or adjusting the viscosity or the like. When CaCl₂ is below 40 mass%, it may be difficult to eliminate the molten salt or oxide adhered to the porous sintered compact after reduction.

As the anode 3, although any conductor can be used without particular limitation, graphite, stainless steel, iron or the like may be used. The temperature of the molten salt during electrolysis is desirably set to 800 to 1050°C. A temperature lower than 800°C may result in deterioration of the fluidity of the molten salt, which inhibits the progress of electrolysis. Since the melting point of Ca which is assumed to be generated by electrolysis is 843°C, the progress of the reduction reaction related to Ca is delayed. Therefore, an excessively low temperature is not desirable.

A temperature higher than 1050°C should be avoided since it results in not only waste of heating energy but also excessive evaporation of the molten salt, and further may promote oxidation of the reduced titanium. In order to avoid the wasteful consumption of the Ca generated, the atmosphere in the container is desirably filled with inert gas during electrolysis.

### (Example 1)

Using a titanium dioxide of rutile type (99% or more), anatase type (99% or more), or rutile type with slightly poor purity (95% or more) which has a different grain size range of powder as a raw material and commercially available TiO as a titanium suboxide, these were mixed together, and then pressure-molded by use of dies into disks of 25 mm in diameter and 10 mm in height. The molded disks were sintered in the atmosphere with varied holding temperatures and varied holding times, and the porosity and hardness after sintering were measured.

The production conditions of the sintered compacts and the measurement results of porosity and hardness after sintering are shown in Table 1. As is apparent from the results, a porous sintered compact having a porosity and a hardness within an intended range can be obtained by adjusting the grain size range, the quantity of titanium suboxide, and the sintering temperature and time.

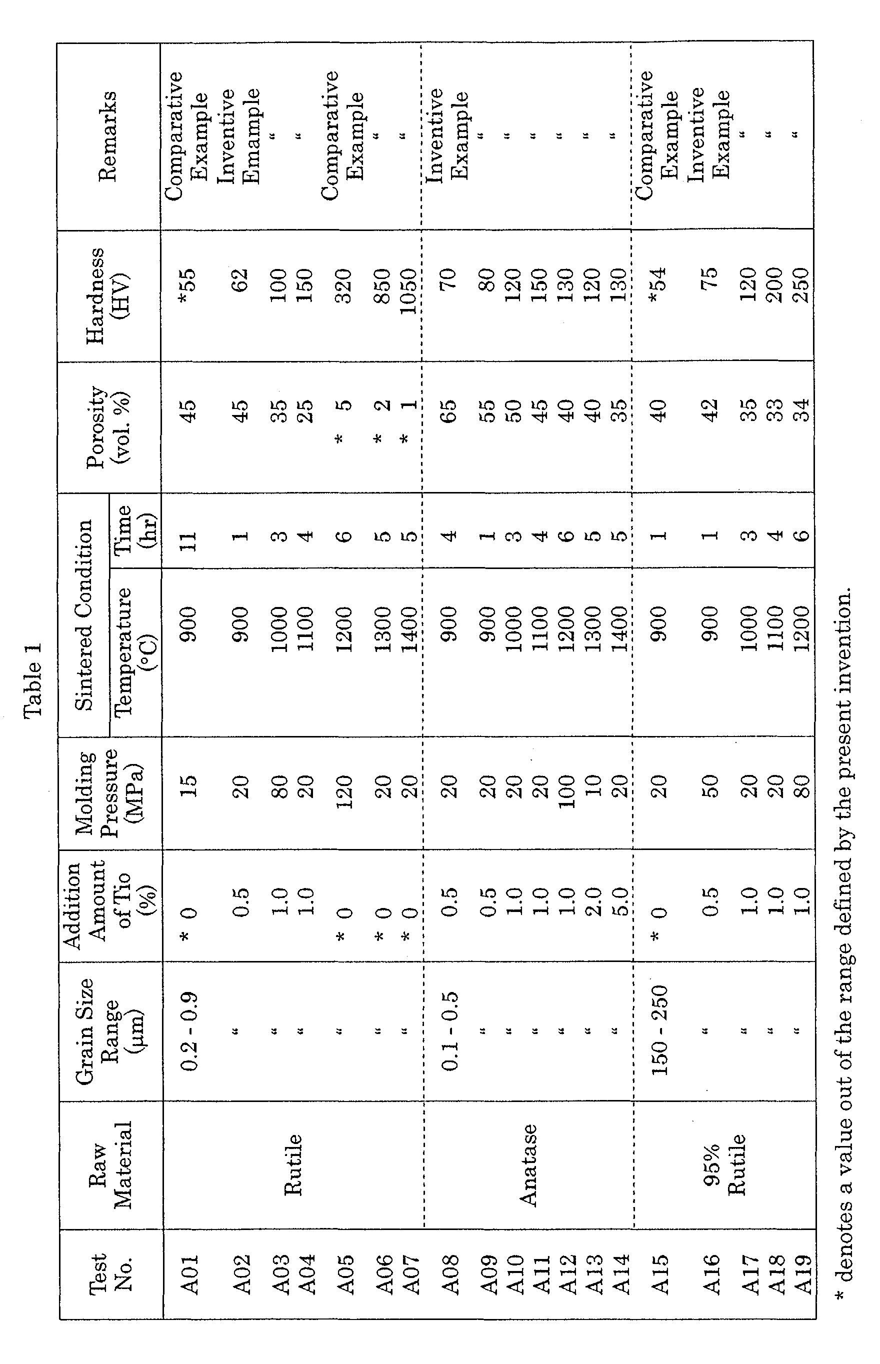

### (Example 2)

With the raw material powders and the sintering conditions shown in Table 1, cuboids of 10×20×10 mm (width, length, height) were pressure-molded by use of dies. At the same time, a titanium bar 2 mm in diameter and 30mm in length was stuck to its longitudinally midpoint of each cuboid to a depth of 15 mm to form a conductor for electric energization, and then integrally sintered to produce sintered raw materials.

Using CaCl₂ alone or in combination with NaCl, MgCl₂, CaF₂ or the like as the molten salt, a graphite electrode as the anode, and a conductive titanium bar as a supporting and electric energizing terminal, the lower half portion of 10×10×10 mm of each cuboid material was dipped in the heated molten salt, and electrolyzed.

The porosity and hardness of the workpiece materials, the composition of electrolytic cell, the cell temperature, the current density, the electric energizing time, the shpe of electrode, the generation efficiency of titanium, and the like are collectively shown in Table 2. The generation efficiency of titanium is shown as the ratio of the actual generation quantity to the Ti quantity calculated, on assumption that TiO₂ changes Ti, by the Faraday's law from the current and time employed. The sintering conditions of the workpiece materials are identical with those of the same test numbers shown in Table 1.

As is apparent from the results shown in Table 2, when the porosity is within the range determined by the present invention, the generation efficiency of metallic titanium is 20% or more, while the generation efficiency is poor with a low current density when the porosity is low.

The hardness after sintering provides an indication of whether the sintering is sufficiently performed or not. When the hardness is low, electrode collapse occurs even if the porosity is within the range of the present invention, and metallic titanium cannot be sufficiently obtained.

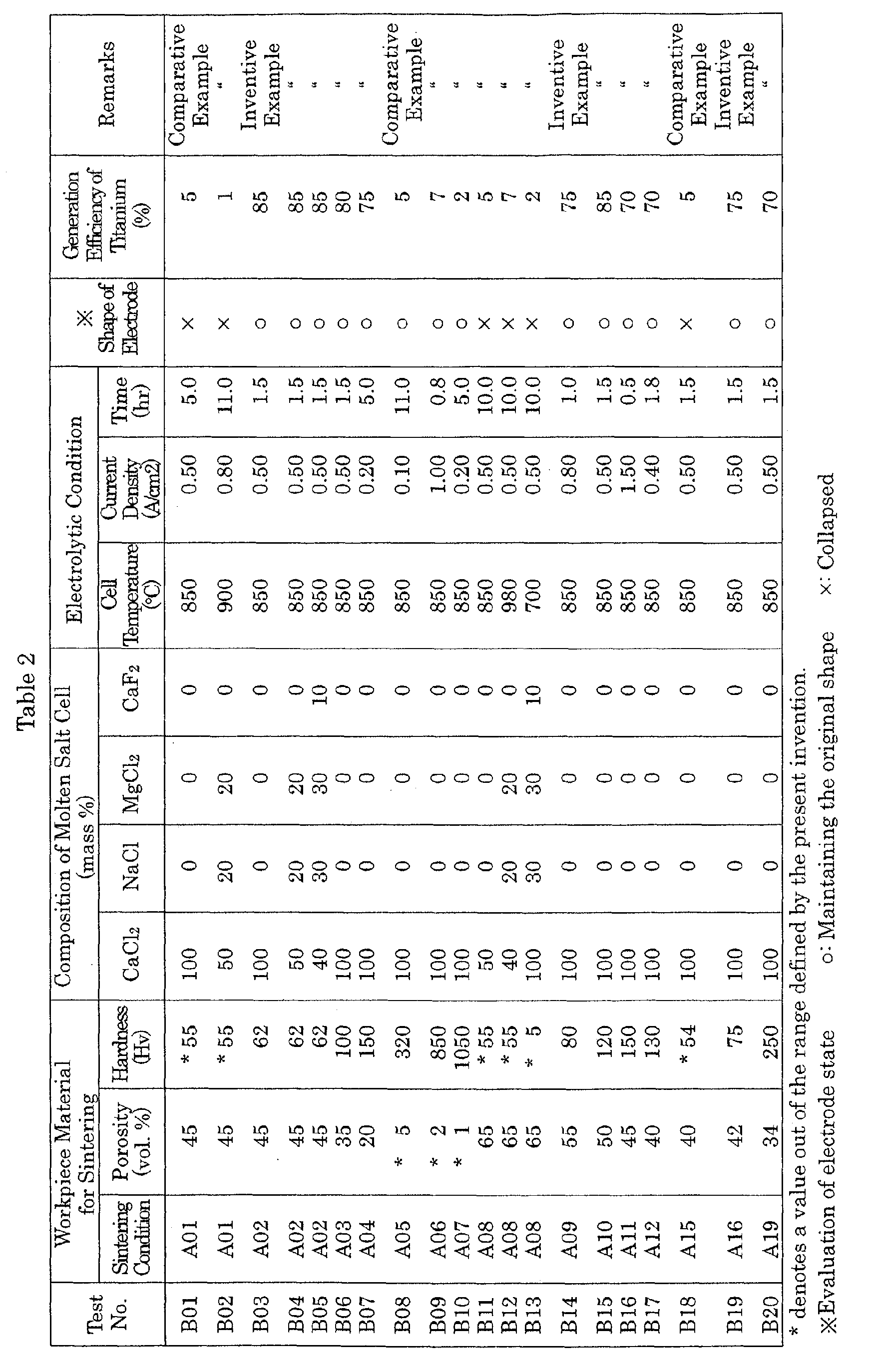

### (Example 3)

Using a titanium oxide powder including 95% or more of TiO₂ as the raw material, disks of 25 mm in diameter and 10 mm in height were molded by use of dies with varied pressurizing forces, the molded disks were sintered in the open air or in an argon atmosphere with varied temperatures and times. For the resultant porous sintered compacts, the porosity, specific surface area, pore diameter distribution, hardness and the like were measured.

The porosity was represented by the ratio obtained by determining the apparent density from the weight and dimension of each sintered compact and dividing the difference with the theoretical density of TiO₂ by the theoretical density, and the specific surface area was determined by the BET process by using nitrogen as adsorption gas. The pore diameter distribution was measured by use of a measuring device by mercury porosimetry (manufactured by SHIMAZU, MICROMERITICS AUTOPORE 9200). The production conditions and measurement results of these porous sintered compacts are collectively shown in Table 3.

Cuboids of 10×20×10 mm (width, length, height) were pressure-molded by use of dies in the same condition as the above disks. At the same time, a titanium bar 2 mm in diameter and 30 mm in length was stuck to the longitudinally midpoint position with square cross-section of each cuboid to a depth of 15 mm to form a conductor for electric energizing, and then integrally sintered to form porous sintered compact electrodes.

The produced electrodes were electrolyzed for 10 hours by using CaCl₂ alone or in combination of 10 mass% of NaCl as the molten salt and graphite as the anode with a cell temperature of 900°C and an electrolytic potential of 3.0V. After the electrolysis, each electrode shape was observed, the quantity of metal Ti generated on the electrode was analyzed, and the ratio of the actual Ti quantity to the Ti quantity which was calculated from the current and time employed, on the assumption that TiO₂ changes Ti by the Faraday's law, was determined as the generation efficiency.

The average rate of Ti generation per unit surface area of the electrode and time was also determined. These results are collectively shown in Table 4.

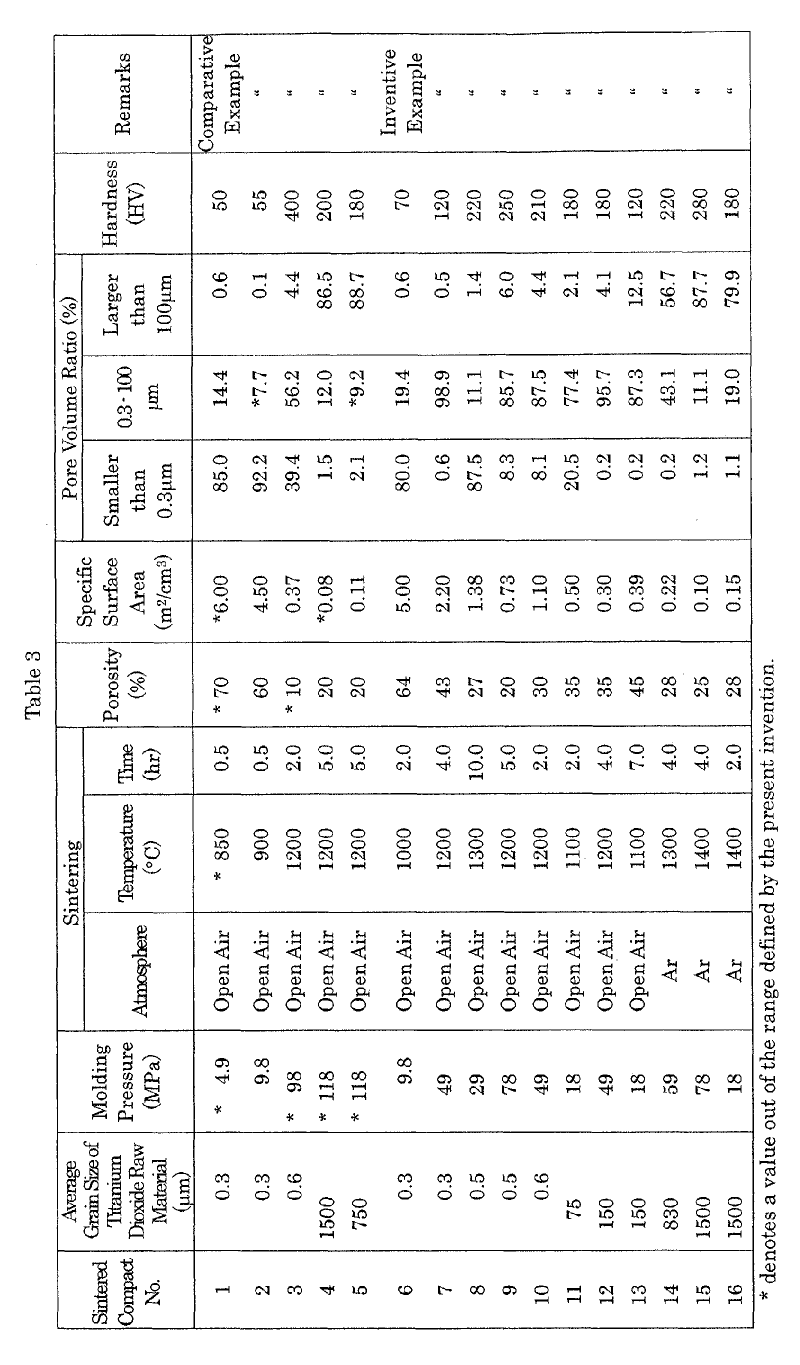

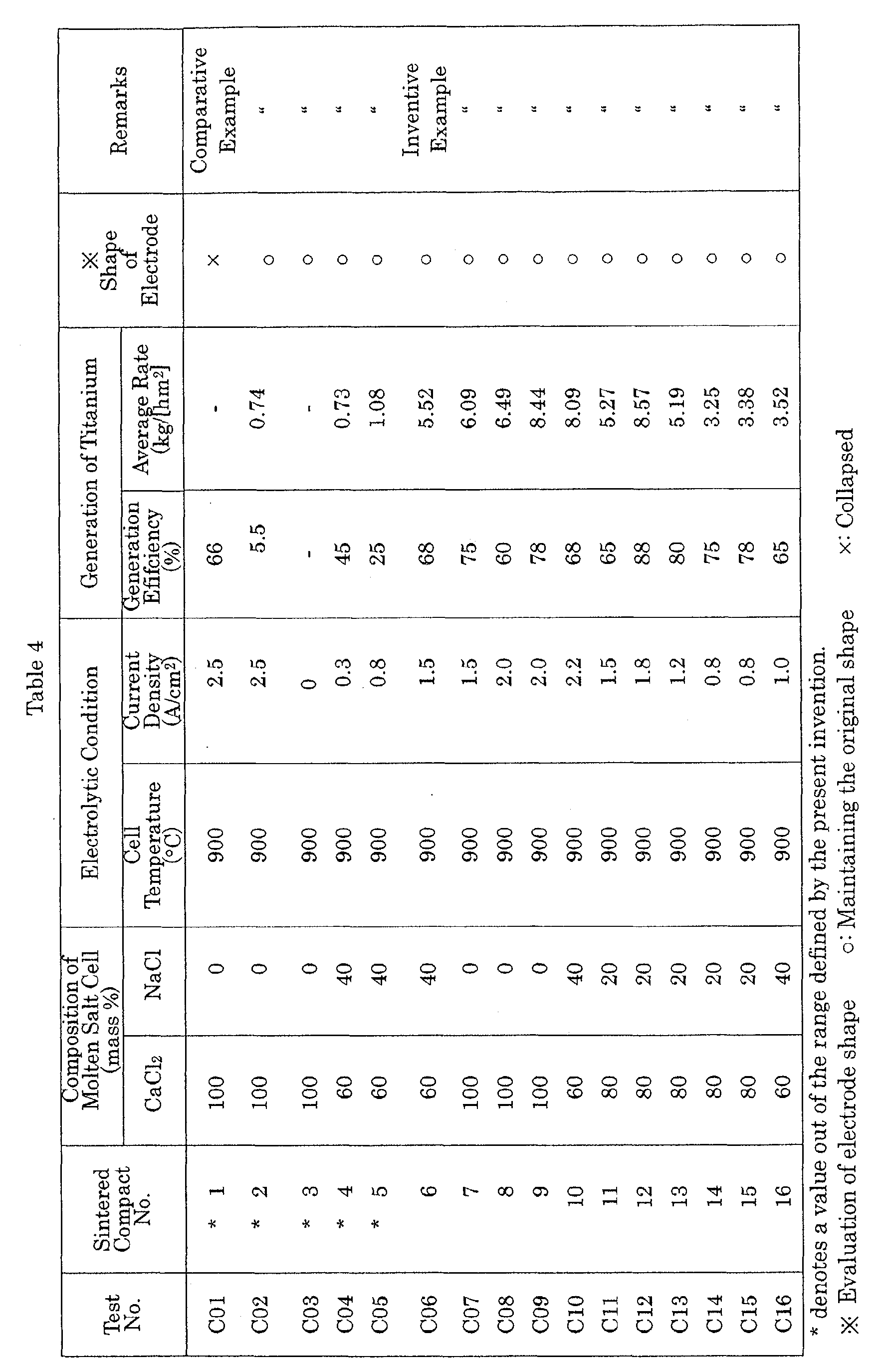

The following is found from the results of Tables 3 and 4. Namely, in Test No. C01 with excessively high porosity and specific surface area and a low hardness, the electrode collapse occurred during electrolysis, and the electrolysis was thus cancelled. In Test No. C02 including pores of an excessively large number of small diameters in spite of a high porosity, the generation efficiency is poor.

In C03, the electrolytic current could be hardly conducted because of extremely low porosity. In C04, the current density could not be raised because of an excessively small specific surface area, and the average generation rate was low. In C05 with small specific surface area and low volume ratio of preferable pores, both the current density and the generation efficiency are low.

Sintered compacts of Test Nos. C06 - C16 are excellent in generation efficiency and average generation rate of titanium, and suitable for production of metallic titanium through direct electrolytic process.

Not only the porosity but also the specific surface area as well as the pore distribution significantly have influences on the generation efficiency and generation rate, and it is apparent that they must be within optimum ranges specified by the present invention.

The porosity, specific surface area and pore diameter distribution of the porous sintered compacts significantly depend on conditions in the production of the sintered compacts such as pressurizing force in powder molding and sintering. When these conditions are set within the ranges specified by the present invention, a satisfactory result can be obtained.

### (Example 4)

Using a titanium oxide powder including 95% or more of TiO₂ as the raw material, TiO was mixed thereto as titanium suboxide, and disks of 25 mm in diameter and 10 mm in height were pressure-molded in the same manner as Example 3 followed by sintering. For the resultant porous sintered compacts, the porosity, specific surface area, pore diameter distribution, hardness and the like were measured.

Similarly to Example 3, cuboids of 10×20×10 mm (width, length, height) were pressure-molded by use of dies in the same condition as the above disks. At the same time, a titanium bar 2 mm in diameter and 30 mm in length was stuck to the longitudinally midpoint of each cuboid to a depth of 15 mm to form a conductor for electric energizing, and then integrally sintered to form porous sintered compact electrodes.

The production conditions and measurement results of the porous sintered compacts are shown in Table 5. As is apparent from the results, by adding the titanium suboxide to the raw material, a porous sintered compact having a sufficiently high hardness and the porosity, specific surface area and pore distribution regulated by the present invention can be obtained at a further lower sintering temperature.

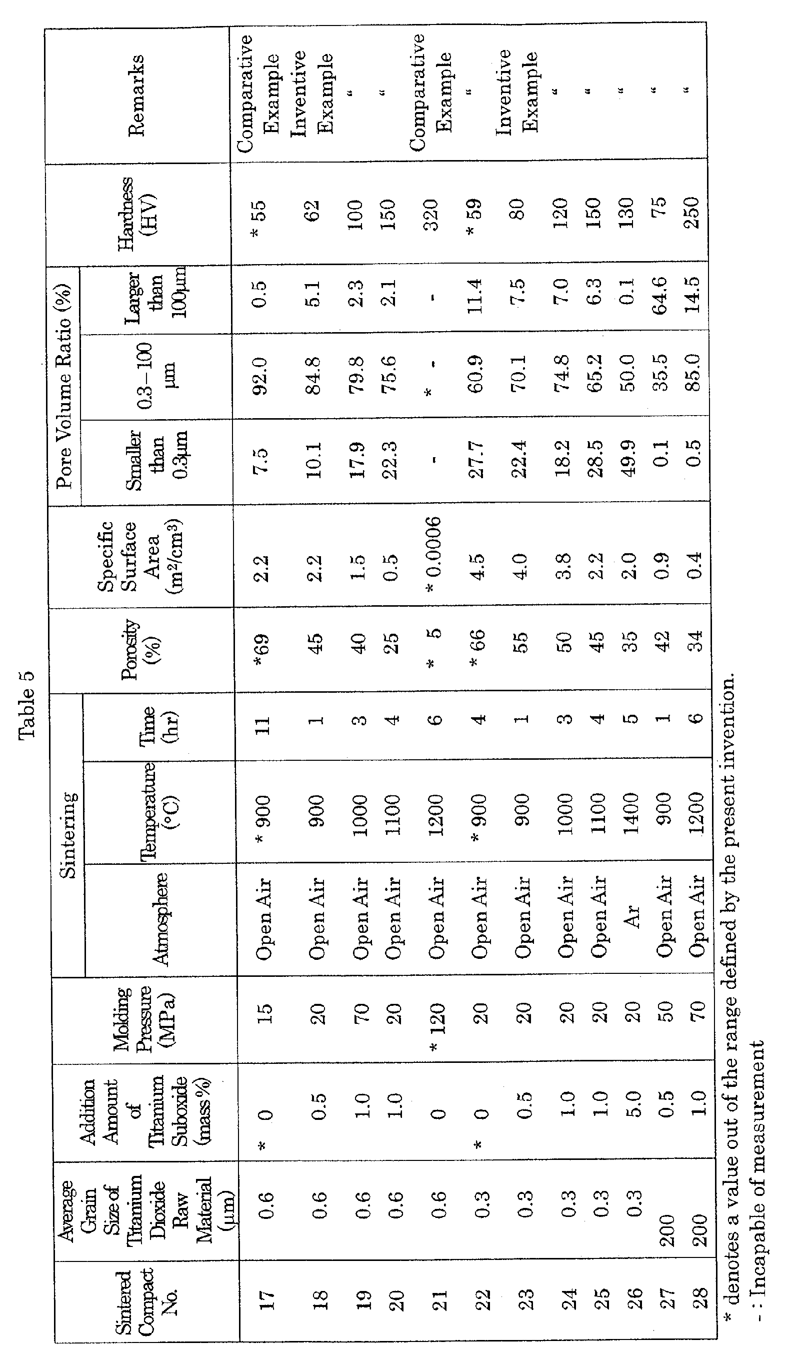

Using the sintered compacts formed into the electrode shape, electrolysis was carried out for 10 hours by using a molten salt cell composed of CaCl₂ alone or in combination with NaCl, MgCl₂, CaF₂ or the like, and a graphite electrode as the anode with an electrolytic potential of 3.0V. After the electrolysis, each electrode shape was observed, and the generation efficiency and average generation rate were determined based on the analysis of metallic Ti. These results are collectively shown in Table 6.

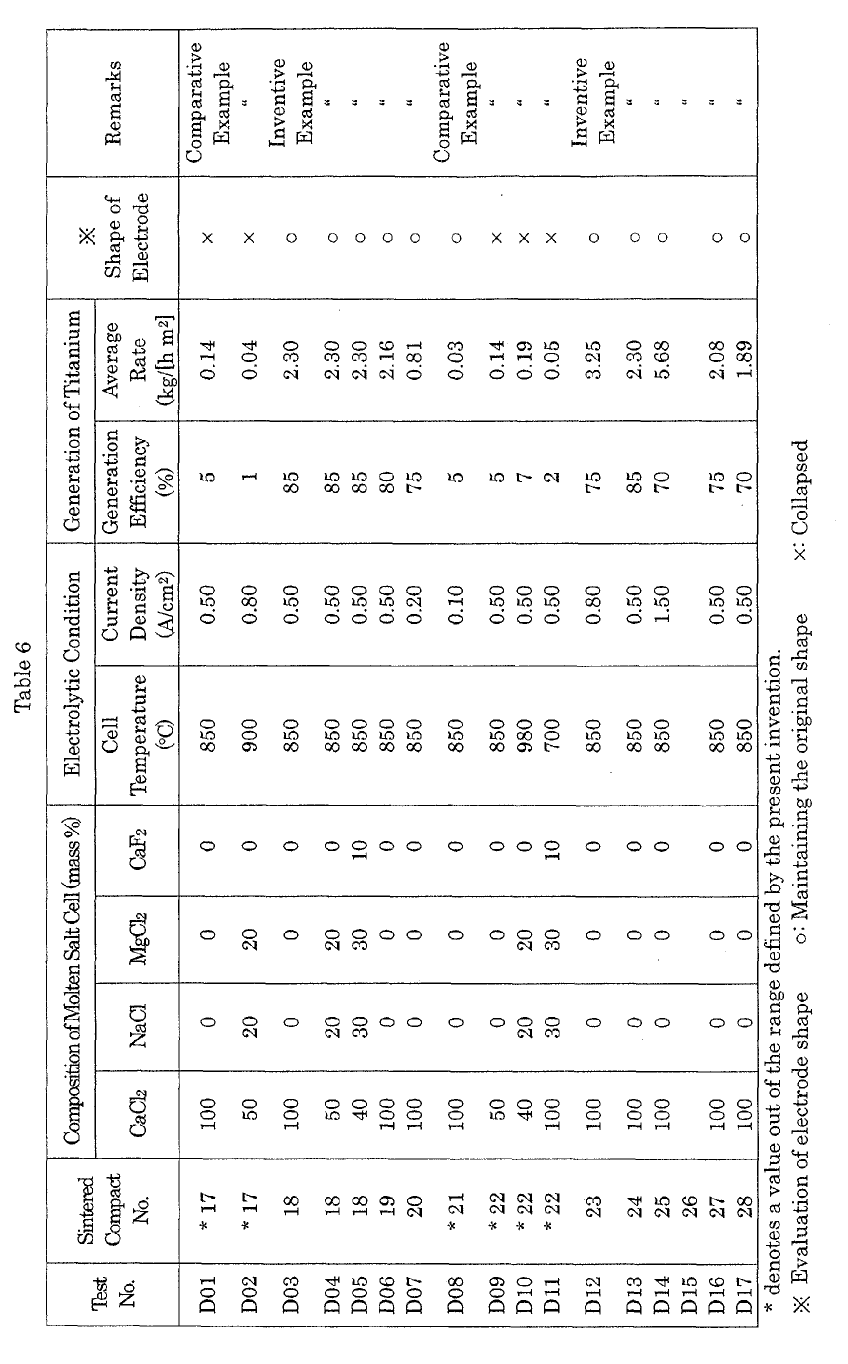

As is apparent from the results of Table 6, when the hardness is increased by adding the titanium suboxide, the resultant porous sintered compact having the porosity, specific surface area and pore distribution specified by the present invention is also an electrolytic raw material excellent in generation efficiency and average generation rate and sufficiently reducible without causing electrode collapse.

### INDUSTRIAL APPLICABILITY

Using the porous sintered compact of oxide titanium of the present invention as an electrolytic raw material in the process wherein titanium oxide is reduced to metallic titanium by the electrolysis with an electrolyte composed of a molten salt enables efficiently obtaining metallic titanium. The electrolytic process using a molten salt is attracting attention as a process capable of directly obtaining metallic titanium from titanium oxide with lower cost than in conventional processes, and the employment of the above porous sintered compact would promote its realization remarkably.

## Claims

1. A porous sintered compact of titanium oxide for production of metallic titanium through direct electrolytic process, **characterized in that** it has a porosity of 20 to 65% and a hardness of 60 (HV) or higher.

2. A porous sintered compact of titanium oxide for production of metallic titanium through direct electrolytic process, **characterized in that** it has a porosity of 20 to 65%, a specific surface area of 0.1 to 5.0 m²/cm³, and a volume ratio of pores with 0.3 to 100µm diameter to be 10% or higher to the total pore volume.

3. A porous sintered compact of titanium oxide for production of metallic titanium through direct electrolytic process, **characterized in that** it has a porosity of 20 to 65%, a hardness of 60 (HV) or higher, a specific surface area of 0.1 to 5.0 m²/cm³, and a volume ratio of pores with 0.3 to 100µm diameter to be 10% or higher to the total pore volume.

4. A process for producing a porous sintered compact of titanium oxide according to any one of claims 1 to 3, **characterized by** using a titanium oxide powder having a grain size of 0.2 to 2000µm, molding it into a required shape with pressurization in a range of 9.8 to 78.5 MPa, and sintering it at 1100 to 1500°C for 0.5 to 10 hours.

5. A process for producing a porous sintered compact of titanium oxide according to any one of claims 1 to 3, **characterized by** adding and mixing 0.1 to 40%, based on mass, of a titanium suboxide powder to a titanium oxide powder followed by molding into a required shape, and sintering the resulting compact at 900 to 1400°C for 0.5 to 10 hours.

6. A process for producing a porous sintered compact of titanium oxide according to any one of claims 1 to 3, **characterized by** using a titanium oxide powder having a grain size of 0.2 to 2000µm, adding and mixing 0.1 to 40 %, based on mass, of a titanium suboxide powder thereto, molding into a required shape with pressurization in a range of 9.8 to 78.5 MPa, and sintering at 900 to 1400°C for 0.5 to 10 hours.

7. A process for producing metallic titanium, **characterized by** using a porous sintered compact of titanium oxide according to any one of claims 1 to 3, arranging it adjacently to a conductor or closely adhered around the conductor to constitute a cathode, dipping it in a molten salt electrolyte of 800 to 1050°C containing 40 mass % or more of calcium chloride, and reducing it by electric energization.
